# FASCICULE DE BREVET EUROPEEN

(11) **EP 3 548 170 B1**
(45) Date de publication et mention de la délivrance du brevet: **09.07.2025**
(21) Numéro de dépôt: 17805228.8
(22) Date de dépôt: 01.12.2017
(51) Int. Cl.: B01J 19/12, H05B 6/80, B82Y 40/00

(54) **PROCEDE DE FUSION D'UN ECHANTILLON DE SELS PAR MICRO-ONDES**
VERFAHREN ZUM SCHMELZEN EINER SALZPROBE MITTELS MIKROWELLEN
METHOD FOR MELTING A SALT SAMPLE BY MICROWAVES

(30) Priorité: 05.12.2016 FR 1661955
(43) Date de publication de la demande: 09.10.2019
(73) Titulaire: Centre National de la Recherche Scientifique, 75016 Paris (FR); College de France, 75005 Paris (FR); Université Polytechnique Hauts-de-France, 59313 Valenciennes (FR); Université de Caen Normandie, 14032 Caen (FR); Ecole Nationale Supérieure d'Ingénieurs de Caen, 14000 Caen (FR); Sorbonne Université, 75006 Paris (FR)
(72) Inventeur: PORTEHAULT, David, 94270 Le Kremlin-Bicetre (FR); MARINEL, Sylvain, 14920 Mathieu (FR); SAVARY, Etienne, 14000 Caen (FR)
(74) Mandataire: Hautier IP
(86) Numéro de dépôt international: PCT/EP2017/081274
(87) Numéro de publication internationale: WO 2018/104187

(56) Documents cités:
- CN-A- 1 958 885
- CN-A- 105 772 055
- ETIENNE SAVARY ET AL: "Frittage micro-ondes en cavité monomode de biocéramiques", MATEC WEB OF CONFERENCES, vol. 7, 7 November 2013 (2013-11-07), pages 04017, XP055374210, DOI: 10.1051/matecconf/20130704017
- BADEV ALEXANDRE ET AL: "Sintering behavior and non-linear properties of ZnO varistors processed in microwave electric and magnetic fields at 2.45GHz", ACTA MATERIALIA, vol. 61, no. 20, 4 October 2013 (2013-10-04), pages 7849 - 7858, XP028744374, ISSN: 1359-6454, DOI: 10.1016/J.ACTAMAT.2013.09.023
- "Élaboration et caractérisation de varistances à fort champ de seuil à base d'oxyde de zinc", 3 August 2016, UNIVERSITÉ DE CAEN BASSE NORMANDIE, https://hal.archives-ouvertes.fr/tel-01351225, article DAMIEN CHORON: "Élaboration et caractérisation de varistances à fort champ de seuil à base d'oxyde de zinc", pages: 52 - 53, XP055374761

## Description

L'invention concerne un procédé de traitement thermique d'un échantillon de sels par micro-ondes et plus particulièrement un procédé de fusion d'un tel échantillon d'un ou plusieurs sels. On entend par « sel » un composé ionique, notamment inorganique, solide à température et pression ambiantes (20°C, 1 atm).

Les procédés de chauffage par micro-ondes sont mis en œuvre dans un grand nombre de domaines, par exemple dans le domaine pharmaceutique, alimentaire, ou encore celui des céramiques de spécialité. Le chauffage par micro-ondes permet par exemple de réaliser des synthèses organiques dans des milieux ou des solvants chauffés par lesdites micro-ondes. Les méthodes typiques de chauffage, utilisant par exemple le rayonnement infrarouge ou la convection d'une phase gazeuse en contact avec un échantillon, présentent des temps de chauffage trop longs vis-à-vis des cinétiques de réactions nécessaires à certaines synthèses chimiques. Leur consommation énergétique nécessite également d'être réduite dans le cas d'applications industrielles. Le chauffage par micro-ondes permet de résoudre en partie ces problèmes techniques en transmettant directement de l'énergie à un objet d'intérêt, un milieu réactionnel et/ou un échantillon. Cette méthode permet également d'augmenter les rendements et les puretés des produits de synthèses chimiques.

Des fours à micro-ondes typiques peuvent être utilisés pour réaliser des synthèses organiques et/ou inorganiques. Ces fours permettent de répondre aux exigences d'efficacité et de sécurité des laboratoires et de l'industrie. Néanmoins, aucune des solutions proposées par l'art antérieur ne permet de fondre rapidement, par interaction directe avec des micro-ondes, des solides interagissant peu avec les micro-ondes, comme c'est le cas pour de nombreux sels tels que l'iodure de lithium, en particulier lorsque ces solides présentent une température de fusion relativement élevée (supérieure ou égale à 200 °C, voire à 300 °C voire même à 400 °C). Il s'agit d'une très forte limitation compte tenu de l'utilisation potentielle de ces milieux en chimie inorganique préparative.

Des fours permettent cependant de chauffer des liquides au-dessus de 400°C en utilisant un chauffage hybride, utilisant des suscepteurs, par exemple en graphite, en carbure de silicium. WO2009/122101 divulgue ce type de four. Les suscepteurs permettent de convertir l'énergie micro-ondes en chaleur et ainsi de chauffer indirectement d'autres objets, par rayonnement infrarouge et, éventuellement, par conduction et/ou convection. Cette méthode peut polluer l'échantillon à chauffer si celui-ci doit être mis en contact avec le suscepteur pour un chauffage efficace. De plus, l'utilisation d'un suscepteur peut compliquer la mise en œuvre du procédé et augmenter ses coûts de mise en œuvre.

Le document EP 0 803 477 divulgue un four de fusion à micro-ondes dans lequel un piston est utilisé pour déplacer les ventres du champ micro-ondes à l'intérieur du volume de matériau à fondre. Ce four convient à la fusion d'une grande quantité de matériaux, mais n'offre pas des vitesses de chauffe très rapides. Au contraire, pour les applications à la synthèse chimique on cherche plutôt à atteindre rapidement la fusion.

Les documents Savary et al., « Frittage micro-ondes en cavité monomode de biocéramiques », Matec Web of conferences*.* A. Badev et al., « Sintering behavior and non-linear properties of ZnO varistors processed in microwave electric and magnetic fields at 2.45 GHz » Acta Materialia*.* décrivent un procédé de frittage de sels. Cependant, les sels sont introduits dans une boîte réalisant une isolation thermique. Les parois de cette boîte servent alors de suscepteurs. L'échantillon peut donc être pollué lors du chauffage.

Le document CN 2007/1958885 divulgue un procédé de fusion de sels pour des réactions chimiques dans un four multi-mode, ce qui entraine des temps de chauffe très longs.

L'invention vise à remédier à une partie ou à la totalité des inconvénients précités de l'art antérieur, et plus particulièrement à proposer un procédé permettant la fusion de substances absorbant faiblement les micro-ondes, en particulier des échantillons contenant un ou plusieurs sels (et, le cas échéant, d'autres substances), et permettant de chauffer des solides et/ou des liquides par chauffage par micro-ondes.

Un objet de l'invention permettant d'atteindre ce but, partiellement ou totalement, est un procédé de fusion d'un échantillon comportant au moins un sel dans une cavité micro-ondes dont la géométrie est adaptée à la résonance selon un seul mode d'un champ électromagnétique stationnaire, définissant au moins un extremum local du champ électrique ou magnétique dans ladite cavité, dans une région spectrale comprise entre 900 MHz et 3 GHz, ladite cavité comprenant au moins une face de réflexion mobile, dont la position peut être ajustée de manière à modifier la géométrie de la cavité micro-ondes, ledit échantillon étant agencé dans un insert creux, ledit insert étant agencé au moins en partie dans la cavité en correspondance spatiale avec un dit extremum, le matériau dudit insert étant transparent aux micro-ondes, ledit procédé comprenant au moins les étapes consistant à :
a) placer le ou lesdits échantillons dans ledit insert ;
b) émettre dans ladite cavité des micro-ondes à une fréquence comprise dans ladite région spectrale;
c) détecter la puissance réfléchie par la cavité résonante chargée avec l'échantillon et l'insert et
d) ajuster au moins un paramètre choisi parmi :
   - la position de ladite ou d'au moins une dite face de réflexion mobile ; et
   - la fréquence des micro-ondes
de manière à minimiser ladite puissance détectée et dans lequel ledit échantillon est agencé dans un récipient, ledit récipient étant agencé dans ledit insert, le matériau dudit récipient étant transparent aux micro-ondes.

Selon des modes de réalisation particuliers d'un tel procédé :
- On peut asservir la position de ladite ou d'au moins une dite face de réflexion de manière à minimiser ladite puissance détectée.
- Lors de ladite étape d), on peut ajuster la position d'un iris permettant l'émission des micro-ondes dans la cavité et d'une dite face de réflexion agencée en face dudit iris, tout en maintenant leur distance constante, de manière à minimiser ladite puissance détectée.
- On peut mesurer la température dudit échantillon de sels et asservir au moins un élément choisi parmi la puissance micro-onde émise dans ladite cavité, la position de ladite ou d'au moins une dite face de réflexion et la fréquence des micro-ondes en fonction d'une température de consigne.
- Lors de l'étape a), l'insert peut être positionné de manière à faire correspondre l'agencement dudit échantillon avec un dit extremum lorsque la cavité est vide et pour une fréquence ν₀ des micro-ondes comprise dans ladite région spectrale.
- Ledit insert peut comprendre au moins une entrée de gaz reliant l'intérieur dudit insert creux à l'extérieur de ladite cavité.
- Ledit insert creux peut comporter une phase gazeuse, et au moins un paramètre choisi parmi le type de gaz et la pression de la phase gazeuse peut être contrôlé au moins par ladite entrée de gaz.
- Ledit insert peut comporter également une sortie gazeuse, et l'on peut appliquer un écoulement gazeux pendant au moins l'une des étapes dudit procédé.
- Ledit insert peut être en quartz.
- Ledit échantillon peut comprendre des halogénures alcalins.
- Le matériau dudit récipient peut être choisi parmi au moins de l'alumine et du nitrure de bore.

L'invention sera mieux comprise et d'autres avantages, détails et caractéristiques de celle-ci apparaîtront au cours de la description explicative qui suit, faite à titre d'exemple en référence aux dessins annexés dans lesquels :
- la figure 1 illustre schématiquement une coupe transverse d'une cavité selon un mode de réalisation de l'invention ;
- la figure 2 illustre schématiquement une coupe transverse d'une cavité selon un mode de réalisation de l'invention, équipée de pyromètres ;
- la figure 3 illustre schématiquement une coupe longitudinale de la cavité ;
- la figure 4 illustre schématiquement une vue isométrique de la cavité ;
- la figure 5 illustre schématiquement une réalisation de l'invention dans laquelle l'échantillon de sels est agencé dans un récipient ;
- la figure 6 est un ensemble de photographies illustrant la fusion d'un échantillon de sels par un procédé objet de l'invention ;
- la figure 7 est un diagramme illustrant une cinétique de fusion d'un échantillon de sels ; et
- la figure 8 illustre schématiquement une coupe transverse d'une cavité selon un mode de réalisation alternatif de l'invention.

La description suivante présente plusieurs exemples de procédés objets de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

De manière générale, on considère par « micro-ondes » des ondes électromagnétiques dont la fréquence est comprise entre 300 MHz et 300 GHz. La fréquence des micro-ondes 2 utilisée dans l'invention est comprise entre 900 MHz et 3 GHz.

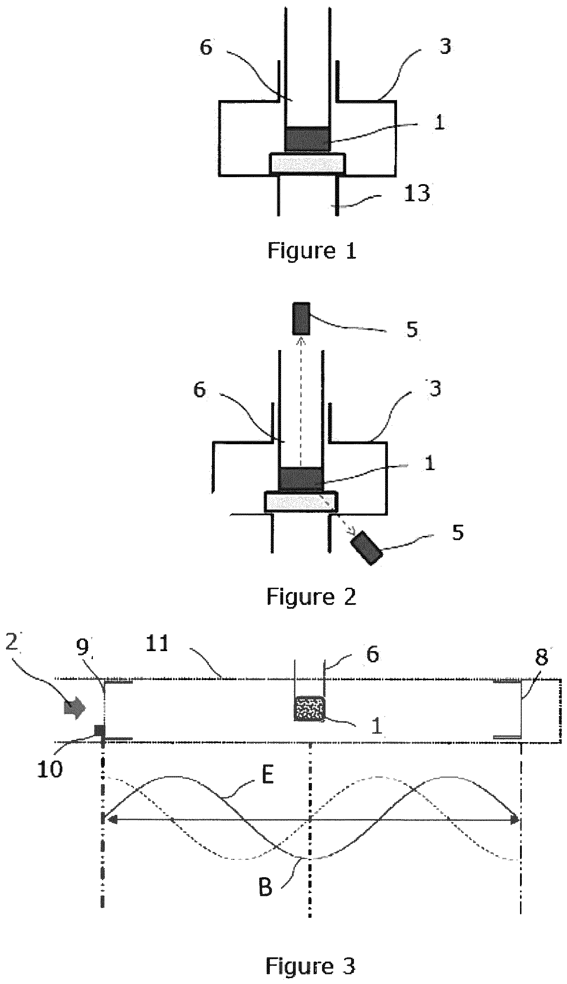

La figure 1 illustre schématiquement une coupe transverse d'une cavité 3 selon un mode de réalisation de l'invention. Les micro-ondes 2 sont générées par un magnétron (non représenté) et transportées par un guide d'onde (non représenté), puis sont émises dans la cavité 3, selon une direction normale au plan de la section illustrée dans la figure 1, après passage par un iris de couplage 9 (illustré dans la figure 3). Ici et dans la suite on considèrera uniquement le cas où les micro-ondes sont générées par un magnétron, mais la généralisation à d'autres types de générateurs, par exemple à semi-conducteur, ne pose pas de difficulté particulière.

De manière générale, dans l'ensemble des réalisations de l'invention, le procédé est réalisé dans une cavité 3 dont la géométrie est adaptée à la propagation, ainsi qu'à la résonance selon un seul mode (monomode) du champ électromagnétique, à une fréquence ν₀ comprise entre 900 MHz et 3 GHz. Plus précisément, la cavité présente un mode TE₁₀ₙ, où « n » désigne le nombre de ventres du champ électrique (typiquement n=3 ou 4 ; un ventre du champ électrique est situé au centre de la cavité lorsque n est impair). Avantageusement, ν₀ peut être sensiblement égale à 915 MHz ou à 2,45 GHz. Dans les différentes réalisations de l'invention, on se place préférentiellement dans une configuration dans laquelle la cavité 3 est adaptée à une résonance des micro-ondes 2 selon un mode unique, la cavité 3 est alors dite monomode.

La géométrie de la cavité 3 peut être ajustée par une face de réflexion 8 (illustrée dans la figure 3). La face de réflexion 8 est mobile : son déplacement permet de modifier la longueur de la cavité 3 : la surface principale de la face de réflexion 8 peut par exemple être ajustable longitudinalement, c'est-à-dire selon une direction normale au plan de la figure 1. La face de réflexion 8 présente une continuité électrique avec les autres éléments de la cavité 3. Une face de réflexion 8 peut par exemple être un piston ou piston court-circuit.

Dans l'ensemble des réalisations de l'invention, le champ électrique E dans la cavité vide, lorsque des micro-ondes 2 y sont émises, a une direction uniforme.

Lors de l'émission de micro-ondes 2, au moins un extremum local de champ électrique ou magnétique stationnaires peut être formé à des endroits distincts dans une cavité 3 monomode. Par exemple, des ventres et des nœuds du champ électrique et/ou magnétique peuvent être arrangés longitudinalement dans une cavité 9 et en quadrature de phase.

Dans l'ensemble des réalisations de l'invention, un insert 6 creux est agencé au moins en partie dans la cavité 3, une partie de l'insert 6 peut également être agencée à l'extérieur de la cavité. L'insert 6 creux est apte à contenir au moins un échantillon 1 de sels dans la cavité 3. Au moins une partie de l'insert 6 est agencée dans une zone correspondant à un extremum local de champ électrique ou magnétique lorsque la cavité 3 est vide. En particulier, la partie de l'insert 6 apte à contenir un échantillon de sels, sous forme solide ou liquide, est agencée à un endroit correspondant à un extremum local du champ électrique ou magnétique lorsque la cavité est vide. Le choix d'un extremum du champ magnétique se justifie seulement pour les échantillons sensibles à la composante magnétique des micro-ondes. Un insert 6 peut être posé sur un support transparent aux micro-ondes 2 dans la cavité.

Dans l'ensemble des réalisations de l'invention, le matériau de l'insert 6 est transparent aux micro-ondes, de manière à chauffer directement par micro-ondes 2 un échantillon agencé dans l'insert 6. Par « transparent », on entend un matériau dont les pertes diélectriques et/ou magnétiques sont sensiblement nulles (facteur de pertes « tan δ » inférieur à 10⁻² et de préférence inférieur à 10⁻³) lorsque le matériau est soumis à un champ micro-ondes à une fréquence donnée. Un matériau transparent possède généralement une conductivité électrique très faible. La conductivité électrique d'un matériau transparent peut être inférieure à 10⁻⁸ S·m⁻¹, préférentiellement inférieure à 10⁻¹⁰ S·m⁻¹ et plus préférentiellement inférieure à 10⁻¹² S·m⁻¹. Le matériau d'un insert 6 peut être du quartz dans un mode de réalisation préféré de l'invention. Par exemple, l'insert 6 peut être un tube de quartz, amovible, d'une épaisseur de paroi de 1,5 mm et d'un diamètre externe de 35 mm. L'insert 6 peut être scellé à la cavité 3.

La cavité 3 peut également comporter une cheminée 13. Une cheminée peut permettre la mise en œuvre d'un procédé sous écoulement gazeux.

Il est également possible de prévoir un orifice d'entrée de sels solides, agencé dans une partie haute de l'insert, et un orifice de sortie de sels fondus, agencé dans une partie plus basse de l'insert, pour permettre la mise en œuvre d'un procédé de fusion en flux continu.

La figure 2 illustre schématiquement une coupe transverse d'une cavité 3 selon un mode de réalisation de l'invention, équipée de pyromètres 5. On peut mesurer avec des pyromètres des températures dans la cavité 3 : on peut mesurer la température à la surface d'un échantillon de sels 1 (cette mesure est illustrée schématiquement par le pyromètre en haut de la figure 2) et/ou la température à la surface d'un insert 6 (cette mesure est illustrée schématiquement par le pyromètre en bas à droite de la figure 2).

La figure 3 illustre schématiquement une coupe longitudinale de la cavité 3. Dans cet exemple de réalisation de l'invention, la cavité comporte un iris de couplage 9 et une face de réflexion 8. Un insert 6 comportant au moins un échantillon de sels 1 est agencé tel que décrit dans la figure 1.

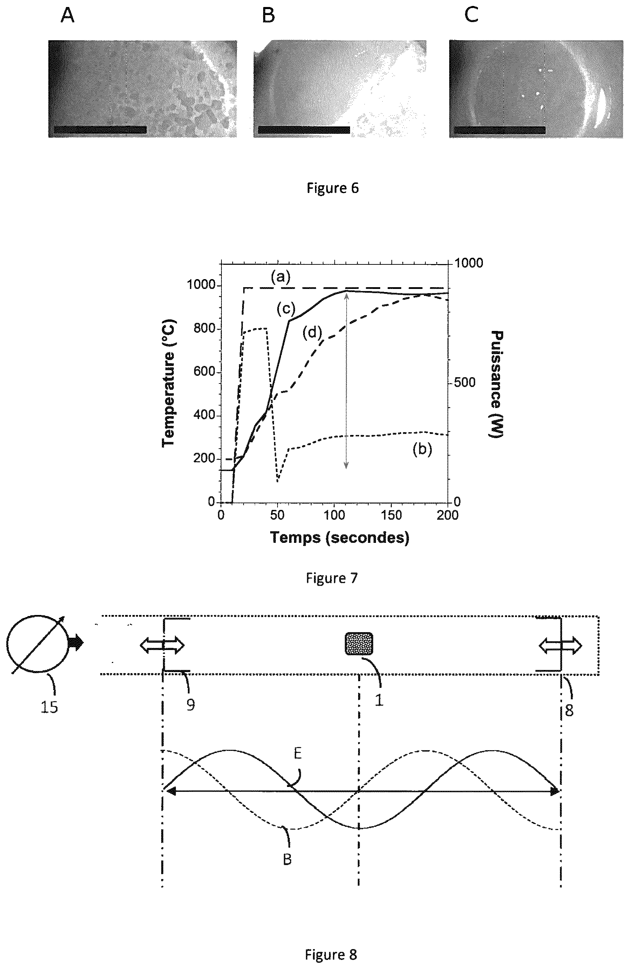

La configuration illustrée de la cavité est associée à une position d'un iris de couplage 9 et à une position d'un piston de court-circuit 8, repérées par des traits discontinus irréguliers. En bas de la figure 3, l'amplitude du champ électrique (E) et l'amplitude du champ magnétique (B) sont illustrées schématiquement. Dans cet exemple, la cavité est adaptée à une résonance selon un seul mode d'un champ électromagnétique stationnaire, définissant au moins un extremum local du champ électrique au milieu de la cavité, en particulier de la cavité vide. L'insert est placé dans la zone correspondant à l'extremum local de champ électrique dans la cavité vide. L'échantillon de sels 1 est placé dans l'insert en correspondance spatiale avec cet extremum, ou ventre de champ électrique. La présence de l'échantillon de sels a pour effet de modifier la position de l'extremum local de champ électrique dans la cavité. Cet extremum de champ électrique est repositionné à l'endroit de l'échantillon de sels en déplaçant le piston de court-circuit jusqu'à minimiser la puissance réfléchie. Il est possible d'effectuer la même procédure avec le champ magnétique lorsque l'on souhaite utiliser celui-ci pour le chauffage d'un échantillon sensible au champ magnétique, ce qui est le cas de certains sels métalliques. En complément ou en variante, il est également possible de repositionner le maximum de champ en déplaçant l'iris 9, qui est une ouverture pratiquée sur une face réfléchissante de la cavité. Selon un mode de réalisation particulièrement avantageux, l'iris et le piston sont déplacés simultanément en gardant constante leur distance ; la figure 8 illustre schématiquement une cavité correspondant à ce mode de réalisation.

D'une manière générale, l'on agit sur la position d'au moins une face réfléchissante de la cavité pour modifier la géométrie du mode de manière à maximiser son couplage avec l'échantillon.

De plus, l'impédance de la ligne micro-ondes pourra être ajutée à la charge disposée avec un adaptateur d'impédance, de manière manuelle ou automatique. De manière conventionnelle, l'adaptation d'impédance est obtenue en agissant sur des vis de réglage (« stubs ») agencées dans le guide d'onde qui relie le générateur de micro-ondes à la cavité. Au cours du procédé, l'impédance de la cavité varie à cause de la variation de température de l'échantillon, ainsi que du déplacement du piston et/ou de l'iris ; toutefois, ces variations sont généralement faibles, ce qui fait que l'ajustement de l'adaptation d'impédance n'est pas critique. Il est même possible de ne pas modifier les conditions d'adaptation d'impédance au cours du processus, au prix d'une perte d'efficacité de quelques pourcents.

La cavité 3 comporte également un capteur de champ micro-ondes 10. Ce capteur de champ peut être disposé en amont de l'iris de couplage. Les micro-ondes peuvent être émises par un magnétron, à une puissance P_{I}. Une onde électromagnétique, après avoir traversé la cavité, revient après avoir été réfléchie par une face de réflexion 8 ; si elle n'est par renvoyée par l'iris de couplage 9 dans la cavité, elle peut être mesurée par un capteur de champ 10, avant d'être déviée et absorbée par un isolateur. Le capteur 10, agencé dans cet isolateur, peut être basé sur une antenne couplée à une diode. La mesure de ce champ électrique ainsi obtenue permet, après étalonnage, d'évaluer la puissance réfléchie P_{R}. La puissance emmagasinée au sein de la cavité, et principalement dans l'échantillon, correspond à la différence entre P_{I} et P_{R}.

Dans l'ensemble des réalisations de l'invention, la fusion d'un échantillon de sels 1 est réalisée au moins en :
- plaçant un échantillon de sels 1, tel que décrit précédemment, dans une zone correspondant spatialement à un extremum de champ électrique ou magnétique lorsque la cavité est vide ;
- émettant des micro-ondes 2 à la fréquence ν₀ dans la cavité.
- détectant la puissance réfléchie P_{R} par la cavité résonante chargée (avec l'échantillon et l'insert) ;
- ajustant la position de la face de réflexion 8 de manière à minimiser la puissance détectée.

La première étape peut être omise. En d'autres termes, la position initiale de l'échantillon peut ne pas correspondre à un extremum de champ électrique ou magnétique. Toutefois cela rendra plus longue et laborieuse la phase d'ajustement de la position de la face de réflexion 8.

Les inventeurs ont découvert que la dernière étape du procédé permet d'atteindre une température de l'échantillon de sels 1 suffisante pour permettre la fusion de nombreux types de sels. En particulier, en plaçant un échantillon de sels 1 dans la cavité, le champ électromagnétique varie spatialement par rapport à une cavité vide et les conditions de résonance du rayonnement micro-ondes peuvent varier ; par ailleurs, la fréquence des micro-ondes émises par le magnétron (ou par tout autre type de générateur) peut dériver légèrement au cours du temps, ce qui affecte également la configuration spatiale du mode. L'ajustement de la position de la face de réflexion et/ou de l'iris permet de trouver la géométrie de la cavité permettant une résonance des micro-ondes, le pic d'intensité électromagnétique correspondant spatialement à l'échantillon de sels 1 (qui reste fixe). Dans cette configuration, l'échantillon de sels 1 absorbe l'énergie micro-onde de manière optimale. La puissance réfléchie P_{R} détectée est dans ce cas minimale. La position de la face de réflexion peut avantageusement être ajustée tout au long du traitement thermique afin de maintenir l'échantillon dans l'extremum de champ électrique ou magnétique, de façon à prendre en compte d'éventuels changements de propriétés diélectriques de l'échantillon au cours du chauffage. Ce procédé de fusion d'un échantillon de sels 1 selon l'invention permet de chauffer des sels liquides, par exemple au-dessus de 400°C, jusqu'à par exemple 1500°C, sans avoir recours à l'utilisation d'un suscepteur. Il est ainsi possible d'envisager de réaliser des réactions chimiques avec ou dans des sels fondus, dont la fusion était jusqu'alors très difficile voire impossible par chauffage micro-ondes sans suscepteur.

Comme cela a été indiqué plus haut, il est avantageux d'asservir la position longitudinale de la face de réflexion 8 de manière à minimiser la puissance réfléchie détectée P_{R} au cours du chauffage. De cette manière, l'absorption de l'énergie micro-ondes par l'échantillon de sels 1 est toujours optimale, et la cinétique de chauffage est plus rapide.

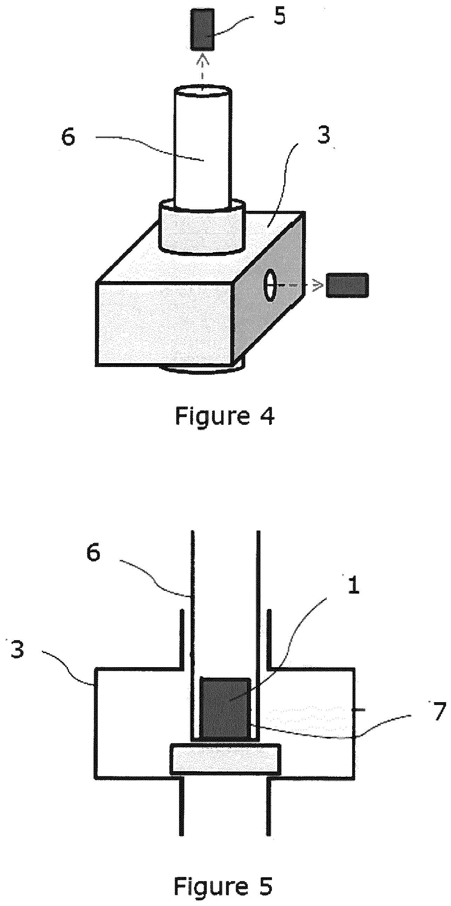

La figure 4 illustre schématiquement une vue isométrique de la cavité 3.
Dans cette réalisation, la température de l'échantillon de sels 1 et de l'insert 6 peut être mesurée, comme décrit en figure 2. Quand l'échantillon de sels 1 est chauffé par un procédé selon l'invention, et porté sous forme liquide, un utilisateur peut avoir besoin de sels sous forme liquide à température constante, ou à une température variant selon une cinétique prédéfinie. Avantageusement, on mesure la température de l'échantillon de sels 1 (sous forme liquide ou solide) ou la température de l'insert 6, et on asservit la puissance micro-ondes et/ou la position de la face de réflexion 8 et/ou de l'iris en fonction d'une température de consigne. Cet asservissement peut être implémenté par un ordinateur ou un circuit électronique adapté, relié électriquement aux différents capteurs et commandes de la cavité 3.

On remarque que cette configuration est différente de la configuration d'un four à micro-onde selon l'art antérieur divulgué dans le document précité EP0803477 dans laquelle plusieurs ventres d'ondes électromagnétiques balaient cycliquement un échantillon de verre à traiter thermiquement. Dans le procédé du document EP0803477 le déplacement du piston - et donc des ventres d'ondes électromagnétiques - s'effectue en boucle ouverte (sans asservissement), dans le seul but de chauffer de manière homogène un volume important de matière. Par contre, dans le cas de l'invention, la position de la surface réfléchissante 8 est asservie de manière à maximiser la transmission de puissance à l'échantillon.

L'insert 6 comporte avantageusement au moins une entrée de gaz et avantageusement une entrée et une sortie de gaz, reliant l'intérieur de l'insert à l'extérieur de la cavité. Ces caractéristiques peuvent permettre de contrôler certains paramètres de la phase gazeuse présente dans l'insert 6 en quartz. En particulier, il est possible de contrôler la pression gazeuse dans l'insert. Un type de gaz contrôlé peut être introduit dans l'insert (notamment des gaz inertes, comme de l'argon ou de l'azote). Enfin, un insert comportant une entrée et une sortie gazeuse permet de travailler en écoulement continu gazeux.

La figure 5 illustre schématiquement une partie de l'invention dans laquelle l'échantillon de sels 1 est agencé dans un récipient 7. Les échantillons de sels 1 sont agencés dans un récipient 7 différent de l'insert 6. En effet, le matériau de l'insert 6, par exemple le quartz, est susceptible de produire des réactions chimiques parasites, comme de la corrosion, avec l'échantillon de sels, à certaines températures. Le récipient 7 est lui-même agencé dans un insert 6. Le matériau du récipient 7 est aussi transparent aux micro-ondes de manière à permettre un chauffage direct de l'échantillon de sels 1. Il peut être choisi au moins parmi de l'alumine, notamment lorsque le traitement est réalisé sous atmosphère oxydante et du nitrure de bore, notamment lorsque le traitement est réalisé sous atmosphère réductrice.

La figure 6 est un ensemble de photographies illustrant la fusion d'un échantillon de sels par un procédé objet de l'invention. L'échantillon est formé par une poudre de nitrate de potassium dans cet exemple. L'ensemble des panneaux A, B et C illustre la surface d'un échantillon dans un récipient 7 selon l'invention. La température est mesurée à la surface de l'échantillon en utilisant une visée pyrométrique 5. La puissance émise est constante et égale à 450 W. La fréquence est de 2,45 GHz. Le panneau A illustre la surface de l'échantillon 1 au temps t₀ correspondant au temps initial de l'émission des micro-ondes 2 dans la cavité 3. La température mesurée est de 25°C. Le panneau B illustre cette surface au temps t₀ + 2 minutes. La température mesurée est de 334°C, et correspond à la température de fusion de l'échantillon 1. Le panneau C illustre cette surface au temps t₀ + 2,58 min et la température mesurée est de 600°C : l'échantillon de sels 1 est liquide. La barre d'échelle des panneaux A, B et C correspond à une longueur de 1 cm.

La figure 7 est un diagramme illustrant une cinétique de fusion d'un échantillon de sels 1. Un échantillon comportant 45% en masse de chlorure de lithium et 55% en masse de chlorure de potassium, pour une masse totale de 10 g, est chauffé par un procédé objet de l'invention. Une atmosphère d'azote est contrôlée dans l'insert 6. La courbe (a) correspond à la puissance émise P_{I} dans la cavité pendant le traitement thermique. La courbe (b) correspond à la puissance réfléchie P_{R} détectée au niveau de l'isolateur. Les puissances correspondantes aux courbes (a) et (b) sont lisibles sur l'échelle à droite du diagramme. La courbe (c) correspond à la température d'un récipient 7 dans lequel est agencé l'échantillon de sels. La courbe (d) correspond à la température de la surface de l'échantillon de sels. Les températures correspondantes aux courbes (c) et (d) sont lisibles sur l'échelle de gauche du diagramme.

Le chauffage commence à 10 s, où la puissance émise P_{I} augmente. La puissance émise atteint 900 W à 20 s et reste alors constante pendant tout le traitement thermique. Le premier décrochage de la puissance réfléchie P_{R}, correspondant sensiblement à un temps de 30 s, correspond au début du changement d'état de l'échantillon de sels 1. Ce changement d'état correspond à la fusion de l'échantillon de sels, à environ 350 °C. De manière générale, lors du changement d'état d'un échantillon de sels 1, les propriétés diélectriques du matériau de l'échantillon 1, en particulier la partie imaginaire de la permittivité diélectrique ε", varient de manière significative. Dans le cas correspondant à la figure 7, l'échantillon de sels fond et absorbe alors fortement les micro-ondes, ce qui se traduit par une diminution de la puissance réfléchie. La variation des propriétés diélectriques entraîne aussi une variation de la distribution du champ électromagnétique dans la cavité 3. Dans des réalisations de l'invention, on ajuste avantageusement la position de la face de réflexion 8 de manière à minimiser la puissance réfléchie pendant et/ou après le changement d'état de l'échantillon. La température de surface de l'échantillon de sels augmente moins vite que la température du récipient 7, car la surface est en contact avec l'atmosphère à température ambiante et perd donc de la chaleur au contact du gaz froid.

Selon un mode de réalisation alternatif de l'invention, au lieu de modifier la géométrie de la cavité en déplaçant une ou plusieurs parois réfléchissantes, il est également possible de modifier la fréquence des micro-ondes, car un changement de longueur d'onde (et donc de fréquence) du rayonnement est équivalent à une variation de longueur de la cavité. Cela permet également de déplacer le ventre du champ et, partant, de maximiser l'efficacité du couplage avec l'échantillon. L'ajustement de la fréquence des micro-ondes peut éventuellement être couplé avec une modification de la géométrie de la cavité, obtenue par exemple en déplaçant le piston 8, l'iris 9 ou les deux à la fois. La figure 8 représente schématiquement un générateur de micro-ondes à fréquence réglable, désigné par la référence 15. Le générateur 15 sera de préférence à état solide.

Les inventeurs ont découvert qu'il était possible de fondre des matériaux habituellement peu sensibles aux micro-ondes. Avantageusement, il est possible de porter à l'état liquide des halogénures alcalins, par exemple de l'iodure de lithium. Les halogénures alcalins peuvent être stables jusqu'à des températures proches de 1500°C et sont des milieux permettant de réaliser des synthèses de micro-nanoparticules. Des micro-nanoparticules peuvent être réalisées par réaction chimique de précurseurs moléculaires ou ioniques dans des milieux fondus dans des conditions cinétiques contrôlées. Ces précurseurs peuvent être présents dans l'échantillon déjà avant la fusion du ou des sels, ou être introduits ultérieurement par un orifice idoine. Avantageusement, un objet de l'invention est un procédé de production de micro-nanoparticules comprenant une étape de fusion d'un échantillon de sels, une réaction chimique de formation d'un solide, par exemple la précipitation de particules, dans l'échantillon de sels sous forme liquide. La grande vitesse de chauffage rendue possible par le procédé de l'invention a pour effet d'accélérer les cinétiques de précipitation dans l'échantillon de sels fondu et par conséquence de diminuer la taille des particules formées. Le procédé de l'invention permet aussi de contrôler la vitesse de chauffage et donc de contrôler la taille des particules formées.

Un procédé de fusion de sels 1 selon l'invention peut également permettre de contrôler des solvants de manière à réaliser d'autres réactions chimiques, par exemple de synthèse organique ou inorganique, à partir de réactifs qui peuvent être présents dans l'échantillon déjà avant la fusion du ou des sels, ou être introduits ultérieurement par un orifice idoine. Il est également possible, par exemple, de réaliser une réaction chimique dans un solvant dont la température est contrôlée par un procédé objet de l'invention décrit précédemment.

Plusieurs expériences de fusion d'échantillons de sels 1 ont été réalisées selon des procédés objets de l'invention.

### Exemple 1

7 grammes de nitrate de potassium (sel nitrate alcalin) sont agencés dans un récipient en alumine 7, lui-même agencé dans un insert 6 en quartz. L'atmosphère de l'insert est de l'air. La puissance du rayonnement micro-ondes 2 émis est de 450 W. La fréquence est de 2,45 GHz. Le sel atteint son point de fusion après 2 minutes (une température de 334°C est mesurée à la surface de l'échantillon de sel 1). Après le changement d'état de l'échantillon 1, la température de l'échantillon 1 liquide varie de 334°C à 600°C en une minute.

### Exemple 2

3 grammes d'un mélange eutectique de LiCl et de KCl sous forme de poudre sont agencés dans un récipient 7 en alumine, lui-même agencé dans l'insert 6 en quartz. L'atmosphère est de l'air. L'échantillon de sels 1 fond à une température mesuré de 353 °C après un ajustement de la puissance du rayonnement micro-ondes 2 émis à 350 W. La fréquence est de 2,45 GHz.

### Exemple 3

3 grammes d'un mélange eutectique de LiCl et de KCl sous forme de poudre sont agencés dans un récipient 7 en alumine, lui-même agencé dans insert 6 en quartz. L'atmosphère est un écoulement continu d'argon. La puissance du rayonnement micro-ondes 2 émis est de 450 W. La fréquence est de 2,45 GHz. L'échantillon de sels 1 fond à 353°C.

### Exemple 4

3 grammes d'un mélange eutectique de LiCl et de KCl sous forme de poudre sont agencés dans un récipient 7 en alumine, lui-même agencé dans insert 6 en quartz. L'atmosphère est un écoulement continu d'un mélange argon/hydrogène dont les proportions volumiques respectives sont 90/10. La puissance du rayonnement micro-ondes 2 émis est de 550 W. La fréquence est de 2,45 GHz. L'échantillon de sels 1 fond à 353°C.

### Exemple 5

3 grammes d'un mélange eutectique de LiCl et de KCl sous forme de poudre sont agencés dans un récipient 7 en alumine, lui-même agencé dans insert 6 en quartz. L'atmosphère est un écoulement continu d'azote. La puissance du rayonnement micro-ondes 2 émis est de 550 W. La fréquence est de 2,45 GHz. L'échantillon de sels 1 fond à 353°C.

### Exemple 6

Un mélange de poudres contenant 4,47 grammes de nitrate de potassium (sels nitrate alcalin), 1,11 grammes de nitrate de manganèse tétrahydrate, 1,14 g de nitrate de lanthane hexahydrate, et 0,28 g de nitrate de strontium est préparé par broyage puis séchage sous vide pendant une nuit. Le mélange résultant est agencé dans un récipient en alumine 7, lui-même agencé dans un insert 6 en quartz. L'atmosphère de l'insert est de l'air. La puissance du rayonnement micro-ondes 2 émis est de 450 W. La fréquence est de 2,45 GHz. Le mélange atteint son point de fusion après 2 minutes (une température de 334°C est mesurée à la surface de l'échantillon de sels 1). Après le changement d'état de l'échantillon 1, la température de l'échantillon 1 liquide varie de 334°C à 600°C en 30 secondes. Les micro-ondes sont immédiatement coupées. Après refroidissement, le mélange est lavé à l'eau pour dissoudre le sel. La poudre noire obtenue est lavée à l'eau par 8 cycles consécutifs de centrifugation-redispersion dans de l'eau pure, puis séchée sous air. L'analyse par microscopie électronique en transmission indique l'obtention de nanoparticules de La_{0,67}Sr_{0,33}MnO₃, de forme cubique, et de diamètre moyen 17 nm, mesuré sur un ensemble de 200 particules. Au contraire, le même protocole avec un chauffage conventionnel, dans un four radiatif, conduit à des particules de diamètre moyen 21 nm, mesuré sur un ensemble de 200 particules. Ainsi, le chauffage micro-ondes par le procédé de l'invention permet de synthétiser des nanoparticules de plus petite taille que celles obtenues par voie conventionnelle.

## Revendications

1. Procédé de fusion d'un échantillon comportant au moins un sel (1) dans une cavité (3) micro-ondes dont la géométrie est adaptée à la résonance selon un seul mode d'un champ électromagnétique stationnaire, définissant au moins un extremum local du champ électrique ou magnétique dans ladite cavité, dans une région spectrale comprise entre 900 MHz et 3 GHz, ladite cavité comprenant au moins une face de réflexion (8, 9) mobile, dont la position peut être ajustée de manière à modifier la géométrie de la cavité micro-ondes, ledit échantillon étant agencé dans un insert (6) creux, ledit insert étant agencé au moins en partie dans la cavité en correspondance spatiale avec un dit extremum, le matériau dudit insert étant transparent aux micro-ondes (2), ledit procédé comprenant au moins les étapes consistant à :
a) placer le ou lesdits échantillons dans ledit insert ;
b) émettre dans ladite cavité des micro-ondes à une fréquence comprise dans ladite région spectrale;
c) détecter la puissance réfléchie par la cavité résonante chargée avec l'échantillon et l'insert et
d) ajuster au moins un paramètre choisi parmi :
- la position de ladite ou d'au moins une dite face de réflexion mobile ; et
- la fréquence des micro-ondes
de manière à minimiser ladite puissance détectée et dans lequel ledit échantillon est agencé dans un récipient (7), ledit récipient étant agencé dans ledit insert, le matériau dudit récipient étant transparent aux micro-ondes.

2. Procédé selon la revendication 1 dans lequel on asservit la position de ladite ou d'au moins une dite face de réflexion de manière à minimiser ladite puissance détectée.

3. Procédé selon la revendication 2 dans lequel, lors de ladite étape d) on ajuste la position d'un iris (9) permettant l'émission des micro-ondes dans la cavité et d'une dite face de réflexion (8) agencée en face dudit iris, tout en maintenant leur distance constante, de manière à minimiser ladite puissance détectée.

4. Procédé selon la revendication 1 dans lequel on mesure la température dudit échantillon de sels et dans lequel on asservit au moins un élément choisi parmi la puissance micro-onde émise dans ladite cavité, la position de ladite ou d'au moins une dite face de réflexion et la fréquence des micro-ondes en fonction d'une température de consigne.

5. Procédé selon l'une des revendications précédentes dans lequel, lors de l'étape a), l'insert est positionné de manière à faire correspondre l'agencement dudit échantillon avec un dit extremum lorsque la cavité est vide et pour une fréquence ν₀ des micro-ondes comprise dans ladite région spectrale .

6. Procédé selon l'une des revendications précédentes dans lequel ledit insert comprend au moins une entrée de gaz reliant l'intérieur dudit insert creux à l'extérieur de ladite cavité.

7. Procédé selon la revendication 6 dans lequel ledit insert creux comporte une phase gazeuse, et qu'au moins un paramètre choisi parmi le type de gaz et la pression de la phase gazeuse est contrôlé au moins par ladite entrée de gaz.

8. Procédé selon la revendication 5 dans lequel ledit insert comporte également une sortie gazeuse, et dans lequel on applique un écoulement gazeux pendant au moins l'une des étapes dudit procédé.

9. Procédé selon l'une des revendications précédentes dans lequel ledit insert est en quartz.

10. Procédé selon l'une des revendications précédentes dans lequel ledit échantillon comprend des halogénures alcalins.

11. Procédé selon la revendication précédente dans lequel le matériau dudit récipient est choisi parmi au moins de l'alumine et du nitrure de bore.

12. Procédé selon l'une quelconque des revendications précédentes pour la mise en œuvre d'une production de micro-nanoparticules.

13. Procédé selon l'une quelconque des revendications 1 à 12 pour la mise en œuvre d'une synthèse organique ou inorganique.

## Patentansprüche

1. Verfahren zum Schmelzen einer Probe, die mindestens ein Salz (1) aufweist, in einem Mikrowellenhohlraum (3), dessen Geometrie an die Resonanz nach einem einzigen Modus eines stationären elektromagnetischen Feldes angepasst ist, das mindestens einen lokalen Extremwert des elektrischen oder magnetischen Feldes in dem Hohlraum in einem Spektralbereich zwischen 900 MHz und 3 GHz definiert, wobei der Hohlraum mindestens eine bewegliche Reflexionsfläche (8, 9) umfasst, deren Position so eingestellt werden kann, dass die Geometrie des Mikrowellenhohlraums verändert wird, wobei die Probe in einem hohlen Einsatz (6) angeordnet ist, wobei der Einsatz mindestens teilweise in dem Hohlraum in räumlicher Übereinstimmung mit einem Extremwert angeordnet ist, wobei das Material des Einsatzes für Mikrowellen (2) durchlässig ist, wobei das Verfahren mindestens die Schritte umfasst, die aus Folgendem bestehen:
a) Platzieren der Probe(n) im Einsatz;
b) Abstrahlen von Mikrowellen mit einer Frequenz innerhalb des Spektralbereichs in dem Hohlraum;
c) Erfassen der Leistung, die von dem mit der Probe und dem Einsatz geladenen Hohlraumresonator reflektiert wird, und
d) Anpassen mindestens eines Parameters, der ausgewählt ist aus:
- der Position der oder mindestens einer beweglichen Reflexionsfläche; und
- der Frequenz der Mikrowellen,
derart, dass die erfasste Leistung minimiert wird, und wobei die Probe in einem Behälter (7) angeordnet ist, wobei der Behälter in dem Einsatz angeordnet ist, wobei das Material des Behälters für Mikrowellen durchlässig ist.

2. Verfahren nach Anspruch 1, wobei die Position der oder mindestens einer Reflexionsfläche so geregelt wird, dass die erfasste Leistung minimiert wird.

3. Verfahren nach Anspruch 2, wobei in Schritt d) die Position einer Blende (9), die das Abstrahlen der Mikrowellen in den Hohlraum ermöglicht, und einer gegenüber der Blende angeordneten Reflexionsfläche (8), wobei ihr Abstand konstant gehalten wird, so eingestellt wird, dass die erfasste Leistung zu minimiert wird.

4. Verfahren nach Anspruch 1, wobei die Temperatur der Salzprobe gemessen wird und wobei mindestens ein Element, das aus der in dem Hohlraum abgestrahlten Mikrowellenleistung, der Position der oder mindestens einer Reflexionsfläche und der Frequenz der Mikrowellen ausgewählt ist, in Abhängigkeit von einer Solltemperatur geregelt wird.

5. Verfahren nach einem der vorhergehenden Ansprüche, wobei in Schritt a) der Einsatz so positioniert ist, dass die Anordnung der Probe mit einem Extremum übereinstimmt, wenn der Hohlraum leer ist und für eine Frequenz v₀ der Mikrowellen, die innerhalb des Spektralbereichs liegt.

6. Verfahren nach einem der vorhergehenden Ansprüche, wobei der Einsatz mindestens einen Gaseinlass umfasst, der das Innere des hohlen Einsatzes mit dem Äußeren des Hohlraums verbindet.

7. Verfahren nach Anspruch 6, wobei der hohle Einsatz eine Gasphase aufweist und mindestens ein Parameter, der aus der Gasart und dem Druck der Gasphase ausgewählt ist, mindestens durch den Gaseinlass gesteuert wird.

8. Verfahren nach Anspruch 5, wobei der Einsatz auch einen Gasauslass aufweist, und wobei während mindestens eines der Schritte des Verfahrens ein Gasstrom angewendet wird.

9. Verfahren nach einem der vorhergehenden Ansprüche, wobei der Einsatz aus Quarz besteht.

10. Verfahren nach einem der vorhergehenden Ansprüche, wobei die Probe Alkalihalogenide umfasst.

11. Verfahren nach dem vorhergehenden Anspruch, wobei das Material des Behälters aus mindestens Aluminiumoxid und Bornitrid ausgewählt ist.

12. Verfahren nach einem der vorhergehenden Ansprüche zum Durchführen einer Herstellung von Mikro-Nanopartikeln.

13. Verfahren nach einem der Ansprüche 1 bis 12 zum Durchführen einer organischen oder anorganischen Synthese.

## Claims

1. A method for melting a sample including at least one salt (1) in a microwave cavity (3) whose geometry is suitable for resonance according to a single mode of a stationary electromagnetic field, defining at least one local extremum of the electric or magnetic field in said cavity, in a spectral region comprised between 900 MHz and 3 GHz, said cavity comprising at least one movable reflective face (8, 9), whose position can be adjusted so as to modify the geometry of the microwave cavity, said sample being arranged in a hollow insert (6), said insert being arranged at least partially in the cavity in spatial correspondence with said extremum, the material of said insert being transparent to microwaves (2), said method comprising at least the steps of:
a) placing said sample(s) in said insert;
b) emitting microwaves in said cavity at a frequency comprised in said spectral region;
c) detecting the power reflected by the resonant cavity loaded with the sample and the insert, and
d) adjusting at least one parameter selected from among:
- the position of said or of at least one said movable reflective face; and
- the frequency of the microwaves
so as to minimise said detected power and wherein said sample is arranged in a container (7), said container being arranged in said insert, the material of said container being transparent to microwaves.

2. The method according to claim 1, wherein the position of said or of at least one said reflective face is servo-controlled so as to minimise said detected power.

3. The method according to claim 2, wherein, during said step d), the position of an iris (9) enabling the emission of the microwaves in the cavity and of said reflective face (8) arranged opposite said iris is adjusted, while keeping their distance constant, so as to minimise said detected power.

4. The method according to claim 1, wherein the temperature of said salt sample is measured and wherein at least one element selected from among the microwave power emitted in said cavity, the position of said or of at least one said reflective face and the frequency of the microwaves are controlled according to a setpoint temperature.

5. The method according to one of the preceding claims, wherein, during step a), the insert is positioned so as to match the arrangement of said sample with a said extremum when the cavity is empty and for a frequency v₀ of the microwaves comprised in said spectral region.

6. The method according to one of the preceding claims, wherein said insert comprises at least one gas inlet connecting the inside of said hollow insert to the outside of said cavity.

7. The method according to claim 6, wherein said hollow insert includes a gas phase, and at least one parameter selected from among the gas type and the pressure of the gas phase is controlled at least by said gas inlet.

8. The method according to claim 5, wherein said insert also includes a gas outlet, and wherein a gas flow is applied during at least one of the steps of said method.

9. The method according to one of the preceding claims, wherein said insert is made of quartz.

10. The method according to one of the preceding claims, wherein said sample comprises alkaline halides.

11. The method according to the preceding claim, wherein the material of said container is selected at least from among alumina and boron nitride.

12. The method according to any one of the preceding claims for implementing a production of micro-nanoparticles.

13. The method according to any one of claims 1 to 12 for implementing an organic or inorganic synthesis.
